# EUROPEAN PATENT APPLICATION

(11) **EP 3 088 735 A1**
(43) Date of publication of application: **02.11.2016**
(21) Application number: 15165447.2
(22) Date of filing: 28.04.2015
(51) Int. Cl.: F03D 13/40, B23P 19/06, B25B 29/02

(54) **METHOD AND ARRANGEMENT TO TRANSPORT A TOWER OF A WIND TURBINE ON A VESSEL**

(71) Applicant: Siemens Aktiengesellschaft, 80333 München (DE)
(72) Inventor: Jepsen, Andreas Winther, 7100 Vejle (DK); Moeller, Jesper, 7330 Brande (DK); Svinth, Kenneth Helligsoe, 8000 Aarhus C (DK)

(57) **Abstract**

The invention relates to a method and an arrangement to transport a tower of a wind turbine on a vessel, and to a bolt tensioner to be used in this method.

A method to transport a tower 10 of a wind turbine by a vessel is disclosed.

The method comprises the steps of attaching the tower 10 to a crane and lifting the tower on board of a vessel and abutting the tower 10 to the connection interface, connecting the tower 10 to the vessel by tightening a predetermined number of bolts by bolt tensioners 1. The predetermined number of bolts is chosen in a way that the tower 10 is sufficiently secured to the vessel for the load situation in a harbor, so that the crane can be detached from the tower 10 before all bolt connections that are necessary for transport are established.

The bolt tensioners 1 comprise an integrated thread 13 to interact with a bolt as a nut, and whereby the bolt tensioner 10 remains at the bolt to maintain the bolt connection during the transport. The method comprises the further steps of detaching the crane connection from the tower 10, and establishing the remaining bolt connections necessary for transportation by vessel.

## Description

The invention relates to a method and an arrangement to transport a tower of a wind turbine on a vessel, and to a bolt tensioner to be used in this method.

A wind turbine comprises a rotor, a nacelle and a tower. The rotor is connected rotatable to the nacelle, and the nacelle is connected rotatable to the tower.

During the installation of the wind turbine the tower is erected. After the installation of the tower, the rotor and the nacelle are arranged on top of the tower.

A wind turbine is manufactured in several independent parts. The parts are transported to the installation site of the wind turbine separately and are connected at the installation site to form the wind turbine.

Wind turbines are known to be installed onshore and offshore. For an offshore installation the parts of the wind turbine need to be transported to the offshore location of the wind turbine.

It is known to use vessels, especially specialized installation vessels to transport and install the parts of a wind turbine to an offshore location.

A part of the wind turbine is lifted on board of the vessel by a crane in a harbor. The part is secured for transport by fastening it to the vessel. At the installation site, the part is disconnected from the vessel and lifted by a crane.

WO 2011/124270 A1 describes a method and system for installing a wind farm at an offshore site, comprising loading wind turbine components onto feeder vessels at a hub port; transporting the feeder vessels loaded with the wind turbine components to a satellite port; docking a first one of the feeder vessels to an installation vessel at the satellite port; transporting the installation vessel and the first feeder vessel to the offshore site; and using the installation vessel to at least partially erect one or more wind turbines from the wind turbine components on the first feeder vessel at the offshore site.

In the case of the tower of the wind turbine, the tower is placed on board of the vessel by a crane. The tower is connected to an interface on the deck of the vessel by bolts. During the time that is needed to tighten the bolts, the tower is still secured in its position by the crane. After the bolts are tightened and the tower is connected to the vessel, the crane connection can be released and the next part of the wind turbine can be hoisted by the crane.

After the vessel arrived at the installation site, the crane is connected to the tower again. The bolts are released and the crane can hoist the tower onto the foundation. The tightening and the release of the bolts might take up to one hour.

In this time the crane is occupied by holding the tower in place and can't be used for other work. The crane and the installation vessel are paid per hour and are expensive. Thus this method shows the disadvantage, that the installation of an offshore wind turbine is expensive.

The aim of the invention is therefore to provide an improved method to fasten part of a wind turbine for transport on a vessel.

The object of the invention is achieved by the independent claim 1. Further features of the invention are disclosed in the dependant claims.

A method to transport a tower of a wind turbine by a vessel is disclosed, whereby the tower comprises a flange at the lower end. The flange comprises holes to be used by bolts and the tower is prepared to be attached to a vessel by a bolt connection.

The vessel comprises a connection interface that is prepared to interact with the flange of the tower to establish a bolt connection between the tower and the vessel to secure the tower during transportation.

The method comprises the steps of attaching the tower to a crane, lifting the tower on board of a vessel and abutting the tower to the connection interface.

The method comprises the further step of connecting the tower to the vessel by tightening a predetermined number of bolts by bolt tensioners. The predetermined number of bolts is chosen in a way that the tower is efficiently secured to the vessel for the load situation in a harbor, so that the crane can be detached from the tower before all bolt connections, that are necessary for transport, are established. The bolt tensioners comprise an integrated thread to interact with a bolt as a nut, and the bolt tensioner remains at the bolt to maintain the bold connection during the transport.

It further comprises the step of detaching the crane connection from the tower and establishing the remaining bolt connections necessary for transportation by vessel.

Wind turbines are manufactured and transported in parts. Wind turbines for offshore locations are transported to the installation site by a vessel. The parts of the wind turbine are loaded onto the vessel and are secured for transport.

In the case of a tower of a wind turbine, the tower is attached to a crane and is lifted on board of the vessel. There, the tower abuts on a connection interface and a bolt connection is established between the tower and the connection interface to secure the tower for transportation.

To secure the tower for transportation, more than a hundred bolt connections have to be established. This number of bolt connections is needed to secure the tower during the transportation on sea. There, the tower needs to be secured to withstand the wind loads and the roll and pitch movements of the vessel on sea.

During the loading operation of the vessel in the harbor, the vessel is secured at the harbor wall. Thus, the tower only has to withstand the wind loads. During the loading operation in the harbor, the vessel does not perform any roll or pitch movement.

The tower of the wind turbine comprises a flange at the lower end and the flange comprises a series of bolt holes. The tower is connected to the connection interface on board of the vessel by bolt connections. The connection interface on board of the vessel may comprise bolts that reach through the bolt holes and the flange of the tower.

The method comprises the step of attaching the tower to a crane and lifting the tower on board of a vessel and abutting the tower to the connection interface.

The tower is loaded on board of the installation vessel and is secured to the vessel in an upright position. Therefore, the tower is lifted on board of the vessel and abuts on the connection interface. The connection interface may comprise bolts that reach through the bolt holes and the flange of the tower. Thus, the bolt connection between the tower and the vessel can be established to secure the tower.

The method comprises the further step of connecting the tower to the vessel by tightening a predetermined number of bolts by bolt tensioners.

A predetermined number of bolts is chosen according to the wind direction and wind speed and thus the load situation acting on the tower in the harbor. The predetermined number of bolts is chosen in a way that the number of bolts is sufficient to secure the tower to withstand the wind loads. The bolt tensioners are arranged at the bolts and the bolt connection is established by the bolt tensioners.

After the bolt connections are established by the bolt tensioners, the crane can be detached from the tower, as the tower is sufficiently secured. The crane is detached from the tower and can be used for the next loading operation of another part of the wind turbine.

After the crane is detached from the tower the remaining bolt connections can be established. Altogether, more than 100 bolt connections might be necessary to secure the tower for transportation on sea.

To interact with the bolts, the bolt tensioners comprise an integrated thread. Thus, the bolt tensioners interact as a nut with the bolts, and establish the bolt connection. Thus, the bolt tensioner is not tightening a nut on the bolt, but screws itself on the bolt. The bolt tensioners remain at the bolt to maintain the bolt connection during the transportation.

The costs of the installation of an offshore wind turbine comprise the crane costs, paid per hour, and the costs for the installation vessel, that are also paid per hour. To attach the tower to the vessel by tightening around 100 bolt connections takes around one hour. Establishing the connection of a predetermined number of bolts by bolt tensioners takes around five minutes.

Thus, the crane can be detached from the tower after around five minutes, instead of after one hour, after the predetermined number of bolts is fastened. The crane can then be used for the next part of the wind turbine that needs to be loaded on board of the vessel.

Thus, the crane time is reduced from one hour to five minutes. Thus, the loading operation is enhanced and the installation time of the wind turbine is reduced. In addition, the installation costs of the wind turbine are reduced.

At least two bolt tensioners are interconnected in a way that they are controllable in a synchronized manner. The method comprises the additional step of activating at least two bolt tensioners simultaneously to accelerate the process of fixing the tower to the vessel.

The bolt tensioners comprise a drive. The drive can be activated electrically, pneumatically, or hydraulically. At least two bolt tensioners are connected and can be activated simultaneously. Thus, the bolt tensioners perform their work in parallel. Thus, the installation time of the tower on the vessel is even further reduced.

The bolt tensioners comprise a locking mechanism to prevent the loosening of the bolt tensioner. The method comprises the additional step of locking the bolt tensioners to avoid a loosening of a bolt connection during to transport.

The bolt tensioners comprise an integrated threat that interacts with the threat of the bolt to establish the bolt connection. Thus, the bolt tensioner connects the tower to the vessel. The bolt tensioner remains in this position to bring the whole transport of the tower to the offshore installation side.

To avoid that a bolt connection gets lost by loosing of the bolt tensioner at the bolt, the bolt tensioner comprises a locking mechanism to lock the bolt tensioner in its position on the bolt, after the bolt tensioner is fastened to the bolt, and to prevent a loosening of the bolt connection by a rotational movement of the bolt tensioner on the bolt.

Thus, the bolt connection is also secured when the bolt tensioner is not connected to a power source. In the case of a failure when the bolt tensioner looses the power connection, the bolt connection is secured.

The vessel comprises guide pins to guide the tower into a predetermined position to be attached to the vessel. The method comprises the additional step of positioning the tower on the vessel by the use of guide pins.

The connection interface of the vessel comprises guide pins. When the tower is loaded on board of the vessel by the crane, the tower abuts on the guide pins and slides along the guide pins into the predetermined position to be attached to the vessel.

Thus, the adjustment work to adjust the position of the tower at the connection interface is reduced. Thus, the loading time of the tower is even further reduced.

A plurality of bolt tensioners form a group of bolt tensioners and a plurality of groups of bolt tensioners forms an arrangement of bolt tensioners. The method comprises the additional steps of determining the direction of the wind acting on the tower. Deciding about locations for the groups of bolt tensioners on the flange of the wind turbine in relation to the wind direction and arranging the groups of bolt tensioners in the predetermined locations.

During the loading operation of the tower onto the vessel, and the time of securing the tower to the vessel, wind may imply a certain load onto the tower. The wind is mainly coming from one major direction. The wind direction can be determined. The bolt tensioners are arranged in groups and several groups form one bolt tensioner arrangement.

The groups of bolt tensioners are arranged at the flange of the wind turbine tower in locations that are determined according to the main wind direction. Thus, the tower can be secured to withstand this wind direction. Thus, the use of the bolt tensioners can be optimized.

The method comprises the additional step of shipping the tower to the offshore installation side of the wind turbine.

The tower is secure to the vessel by the bolt tensioners and in addition by the remaining bolt connections that are necessary to withstand the loads that occur during the transportation on sea. After the bolt connections are established, the vessel can leave the harbor and proceed to the installation site of the offshore wind turbine.

The method comprises the additional steps of securing the vessel at the installation site detaching the bolt connection necessary for transportation, connecting the tower to a crane, releasing the connection of the bolt tensioners on the bolts and lifting the tower by the crane.

When the vessel arrives at an installation site of the offshore wind turbine, the vessel is secured for the installation of the wind turbine. Therefore, the vessel is lifted out of the water by piles that press themselves against the sea-floor and rise the vessel out of the water.

Thus the vessel will no longer perform a roll or pitch movement in the water. Thus, the only load acting on the wind turbine tower is the wind load.

To withstand the wind load, not all of the bolt connections established are necessary. Thus, when the vessel is rising out of the water, a part of the bolt connections can be detached. After the part of bolt connections, that is only necessary for transportation of the tower on the vessel, is detached the tower is connected to the crane.

Thus, the tower is secured by the crane and the remaining bolt connections can be released. The remaining bolt connections are the connections that are established by the bolt tensioners.

Thus, after the tower is attached to the crane, the bolt tensioners can be activated and the bolt connections are released. The tower can then be lifted by the crane and can be installed on a foundation.

The crane time that is needed to secure the wind turbine tower is reduced to the time needed to disconnect the bolt tensioners from the bolts.

The crane is not needed to secure the tower during the loosening of the bolt connections that are only needed for transportation. Thus, the crane time per tower is reduced from around one hour to around five minutes. Thus, the installation time of the wind turbine is reduced.

A bolt tensioner to be used in a method according to the invention is disclosed. The bolt tensioner comprises a stationary part that is prepared in a way to be detachable arranged at a tower of a wind turbine in a fixed orientation in respect to the tower.

The bolt tensioner comprises a second part that is rotatable in respect to the stationary part. The bolt tensioner further comprises a drive to rotate the second part in respect to the stationary part to tighten a bolt connection, whereby the drive tightens the bolt connection when it is supplied with power.

The bolt tensioner comprises a locking mechanism to block a movement of the second part in respect to the stationary part, so that an unintentional loosening of a bolt connection is prevented independent from power being supplied to the bolt tensioner.

The bolt tensioner comprises a drive. The drive can be an electric drive, a pneumatic drive, or a hydraulic drive. The power supplied to the drive can be electric power or hydraulic pressure, or pneumatic pressure. In the case of a loss of the power, the second part of the bolt tensioner might be able to rotate in respect to the stationary part, and thus loosen the bolt connection.

The bolt tensioner comprises a locking mechanism. This locking mechanism is used to block the movement of the second part in respect to the stationary part. Thus, an unintentional movement between the second part in the stationary part is avoided. Thus, loosening of the bolt connection is prevented. Thus, the bolt connection is secured even in the case of a loss of a power.

The second part of the bolt tensioner comprises a threat to interact with the threat of the bolt. The second part of the bolt tensioner comprises a threat, and is screwed on the threat of the bolt as a nut.

Thus, the second part of the bolt tensioner is used as a nut on the bolt. Thus, no additional nut is needed to establish the bolt connection.

An arrangement is disclosed to be used in a method according to the invention, whereby the bolt tensioners are connected to each other and to a power source by a connection, preferably a cable or a hose. The power source can be an accumulator in the case of electric power, or a pump station in the case of hydraulic or pneumatic power. The power is applied to the bolt tensioners by a switch or a valve.

A plurality of bolt tensioners form a group of bolt tensioners, and the arrangement comprises a plurality of groups of bolt tensioners. The groups of bolt tensioners are connected by the connection in a way to be arranged in difference spased apart locations along the flange of the tower.

The bolt tensioners are arranged in groups. The bolt tensioners of one group are arranged at the flange of the wind turbine close together.

Thus, the single bolt tensioners of a group of bolt tensioners are arranged in a distance of two to three bolts in between.

An arrangement of bolt tensioners comprises several groups of bolt tensioners. The groups of bolt tensioners can be arranged at the flange of the wind turbine spaced apart. For example when the arrangement comprises four groups of bolt tensioners, the groups of bolt tensioners can be spaced apart by around 90 ° along the flange.

The bolt tensioners are connected by a connection to deliver power to the bolt tensioners. The connection between the groups of bolt tensioners is long enough to install the bolt tensioners at different areas of the flange of the wind turbine.

Depending on a diameter of the tower and a predetermined location of the groups of bolt tensioners, the connection between the groups of bolt tensioners has to comprise a certain length. Thus, the flexibility to arrange the groups of bolt tensioners in certain locations is enhanced.

The invention is shown in more detail by the help of figures. The figures show a preferred configuration and do not limit the scope of the invention.
- FIG 1: shows a bolt tensioner as used in the described method,
- FIG 2: shows the arrangement of bolt tensioners as used in the described method,
- FIG 3: shows a detail of a group of bolt tensioners,
- FIG 4: shows an arrangement of bolt tensioners at the wind turbine tower flange.

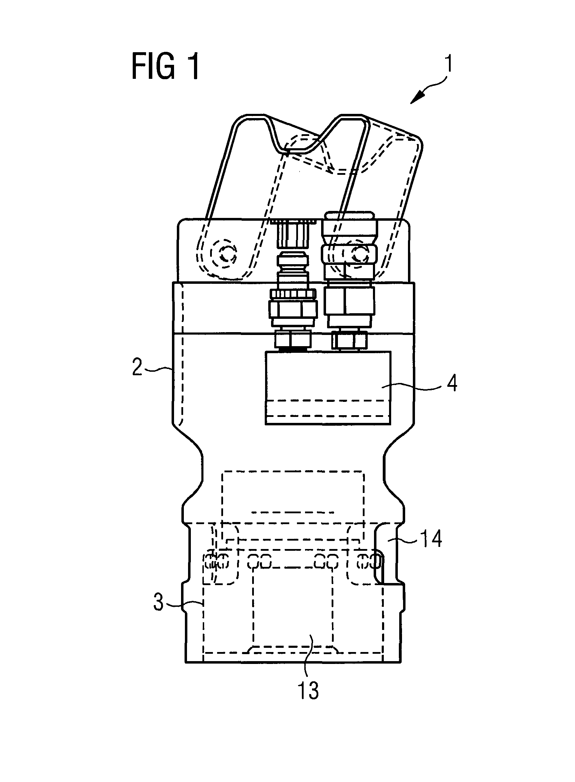

FIG 1 shows a bolt tensioner as used in the described method.

FIG 1 shows a bolt tensioner 1. The bolt tensioner 1 is used to tighten a bolt connection between the tower of the wind turbine and the transportation vessel.

The bolt tensioner comprises a stationary part 2. When the bolt tensioner is attached to the flange of the wind turbine tower, the stationary part 2 of the bolt tensioner 1 comprises a fixed orientation in respect to the tower of the wind turbine.

The bolt tensioner 1 comprises a rotatable part 3 that is rotatable in respect to the stationary part 2. A drive is used to rotate the rotatable part 3 in respect to the stationary part 2. The drive can be an electrical drive, a hydraulic drive or a pneumatic drive.

The bolt tensioner 1, as used in the described method, comprises an integrated thread 13 to interact with the thread of the bolt. Thus, the bolt tensioner 1 is not used to tighten a nut on a bolt but it acts as a nut on the bolt to tighten the bolt connection.

The bolt tensioner 1 comprises a locking mechanism 14 to lock the position of the rotatable part 3 in respect to the stationary part 2 to avoid an unintentional rotation of the rotatable part 3.

Thus, the rotational position of the rotatable part 3 in respect to the stationary part 2 is kept independently form the status of the drive. Thus, even if a hydraulic or pneumatic connection gets lost and the drive is not under power, an unintentional loosening of the bolt connection is prevented and the bolt connection stays in a tight condition as long as the locking mechanism 14 is activated.

The bolt tensioner 1 comprises a connection 4 to a hydraulic system to activate the drive of the bolt tensioner 1.

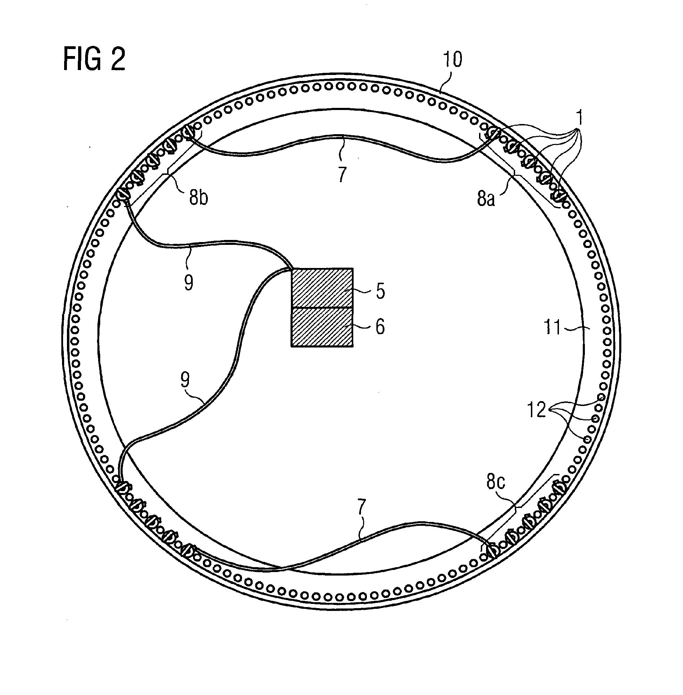

FIG 2 shows the arrangement of bolt tensioners as used in the described method.

FIG 2 shows the arrangement of bolt tensioners 1 as used to fasten the tower of a wind turbine to a transportation vessel.

The tower 10 of a wind turbine comprises a flange 11. The flange 11 comprises bolt holes 12. The tower 10 is attached to a crane and is lifted on board of a transportation vessel. There, it abuts on a connection interface and needs to be connected.

After the tower 10 is arranged on the connection interface, bolts reach through the bolt holes 12 and a bolt connection can be established to attach the tower 10 to the transportation vessel.

The bolt tensioners 1 are arranged in groups 8A, 8B, 8C and 8D. In this case, four groups of five bolt tensioners form the arrangement. The groups 8A, 8B, 8C and 8D of bolt tensioners 1 can be arranged at the flange of the wind turbine tower according to the wind load situation in the harbor.

The bolt tensioners 1 are connected by a cable or a pneumatic or hydraulic connection, and also the groups 8A, 8B, 8C and 8D of bolt tensioners 1 are connected by a connection 7. The connections lead to a power source 6. This can be an electrical power source, a pneumatic power source or a hydraulic power source. Means to activate 5 are integrated in the connection. The means to activate 5 can be a switch or a valve. Thus, all bolt tensioners 1 can be activated by a central means to activate 5. The bolt tensioners 1 are arranged on the bolts at the flange 11 of the tower 10. The bolt tensioners 1 are then activated centrally by the means 5.

The bolt tensioners 1 establish a tight bolt connection and thereby fix the tower to the connection interface on the vessel. The tower 10 is then connected tightly enough to the vessel for the load, especially wind load, situations in a harbor. Thus, the crane connection can be released from the tower 10. The remaining bolt connections that are necessary for the load situation during transportation on sea can thereafter be tightened without a crane connection securing the tower 10.

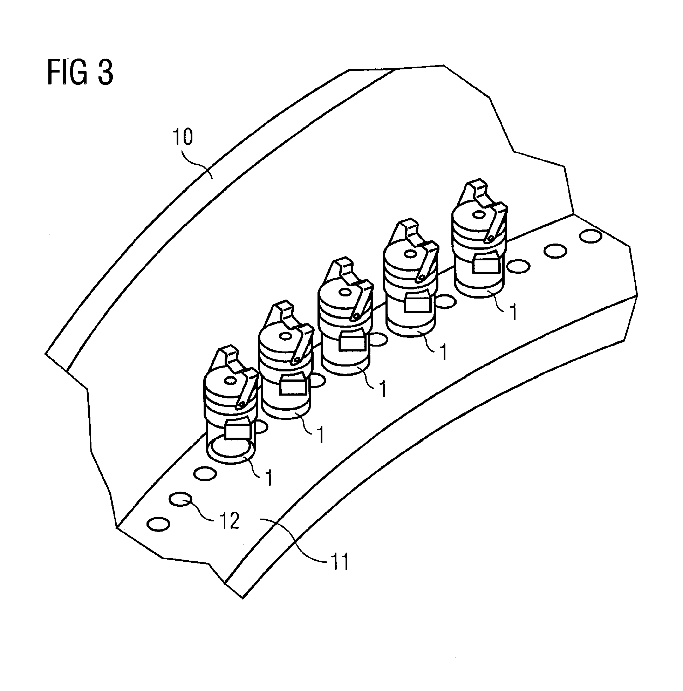

FIG 3 shows a detail of a group of bolt tensioners.

FIG 3 shows a detail of an installation situation of bolt tensioners 1 at a tower 10 of a wind turbine.

A group of the bolt tensioners 1 is arranged at a flange 11 of a tower 10 of a wind turbine. The flange 11 comprises bolt holes 12. After the tower 10 abuts on the connection interface of the vessel, bolts reach through the bolt holes 12 and the bolt tensioners 1 are arranged on top of the bolts.

When the bolt tensioners 1 are activated, the rotational part of the bolt tensioners screws itself on the thread of the bolts. Thus, a bolt connection is tightened and the bolt tensioner 1 acts as a nut on the bolt.

The bolt connection including the bolt tensioner 1 stays connected during the transportation of the tower on the vessel. The bolt connection is first released at the installation site of the wind turbine after the vessel is secured for installation at the site.

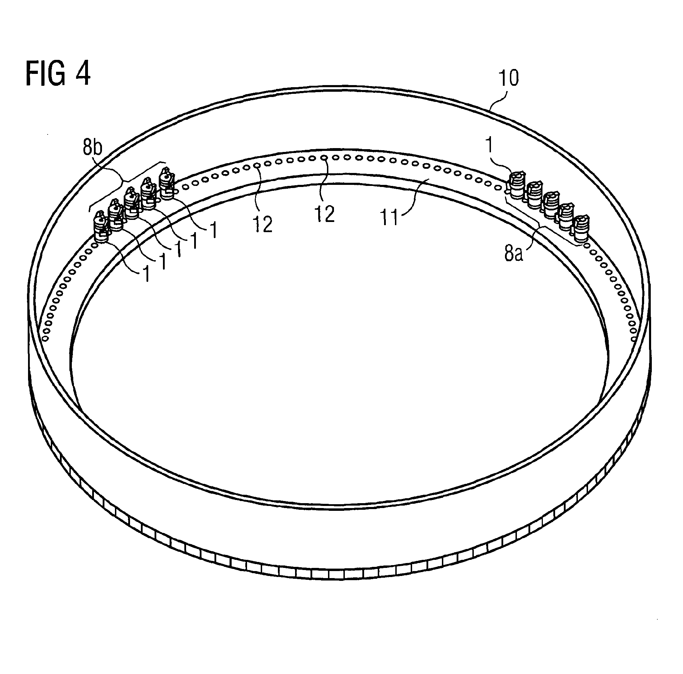

FIG 4 shows an arrangement of bolt tensioners at the wind turbine tower flange.

FIG 4 shows an arrangement of bolt tensioners at the wind turbine tower flange 11.

The wind turbine tower 10 comprises a flange 11. The flange 11 comprises bolt holes 12. Bolts reach through the bolt holes 12 and bolt tensioners 1 establish a tight bolt connection with the bolts.

The bolt tensioners 1 are arranged in groups 8A, 8B. The groups of bolt tensioners 8A, 8B can be arranged at different parts of the flange 11 of the tower 10. The groups of bolt tensioners can be arranged depending on the main wind direction, thus the main load situation, on the tower in the harbor.

Thus, the tower can be connected to the vessel and secured for certain wind situations.

After the tower 10 is secured to the vessel by the arrangement of bolt tensioners 1, the crane connection to the tower 10 can be released and the remaining bolts that are necessary for the transportation of the tower on sea can be established.

The crane connection is not needed for securing the remaining bolt connections. Thus, the crane can meanwhile be used for loading other parts of the wind turbine.

The illustration in the drawings is in schematic form. It is noted that in different figures, similar or identical elements are provided with the same reference signs.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. Method to transport a tower (10) of a wind turbine by a vessel,
- whereby the tower (10) comprises a flange (11) at the lower end, and the flange comprises holes (12) to be used by bolts, and the tower (10) is prepared to be attached to the vessel by a bolt connection, and
- whereby the vessel comprises a connection interface that is prepared to interact with the flange (11) of the tower (12) to establish a bolt connection between the tower (10) and the vessel to secure the tower (10) during transportation,
comprising the steps of
- attaching the tower (10) to a crane and lifting the tower on board of a vessel and abutting the tower (10) to the connection interface,
- connecting the tower (10) to the vessel by tightening a predetermined number of bolts by bolt tensioners (1), whereby the predetermined number of bolts is chosen in a way that the tower (10) is sufficiently secured to the vessel for the load situation in a harbor, so that the crane can be detached from the tower (10) before all bolt connections that are necessary for transport are established, and whereby the bolt tensioners (1) comprise an integrated thread (13) to interact with a bolt as a nut, and whereby the bolt tensioner (10) remains at the bolt to maintain the bolt connection during the transport,
- detaching the crane connection from the tower (10),
- establishing the remaining bolt connections necessary for transportation by vessel.

2. Method according to claim 1, whereby at least two bolt tensioners (1) are interconnected in a way that they are controllable in a synchronized manner,
comprising the step of
- activating at least two bolt tensioners (1) simultaneously, to accelerate the process of fixing the tower (10) to the vessel.

3. Method according to one of the preceding claims, whereby the bolt tensioners (10) comprise a locking mechanism (14) to prevent a loosening of the bolt tensioner (1), comprising the additional step of
- locking the bolt tensioners (1) to avoid a loosening of a bolt connection during the transport.

4. Method according to one of the preceding claims, whereby the vessel comprises guide pins to guide the tower (10) into a predetermined position to be attached to the vessel,
comprising the additional step of
- positioning the tower (10) on the vessel by the use of guide pins.

5. Method according to one of the preceding claims, whereby a plurality of bolt tensioners (1) form a group (8a, 8b, 8c) of bolt tensioners (1), and a plurality of groups (8a, 8b, 8c) of bolt tensioners (1) form an arrangement of bolt tensioners, comprising the additional steps of
- determining the direction of the wind acting on the tower (10),
- deciding about locations for the groups (8a, 8b, 8c) of bolt tensioners (1) on the flange of the wind turbine in relation to the wind direction,
- arranging the groups (8a, 8b, 8c) of bolt tensioners (1) in the predetermined locations.

6. Method according to one of the preceding claims, comprising the additional step of
- shipping the tower (10) to the offshore installation site of the wind turbine.

7. Method according to one of the preceding claims, comprising the additional steps of
- securing the vessel at the installation site, and
- detaching the bolt connections necessary for transportation,
- connecting the tower (10) to the crane,
- releasing the connection of the bolt tensioners (1) on the bolts,
- lifting the tower (10) by the crane.

8. Bolt tensioner (1) to be used in a method according to one of the claims 1 to 6, whereby the bolt tensioner (1) comprises
- a stationary part (2) that is prepared in a way to be detachably arranged at a tower (10) of the wind turbine in a fixed orientation in respect to the tower (10), and
- a second part (3) that is rotatable in respect to the stationary part (2), and
- a drive to rotate the second part (3) in respect to the stationary part (2) to tighten a bolt connection, whereby the drive tightens the bolt connection when it is supplied with power,
**characterized in that** the bolt tensioner (1) comprises a locking mechanism (14) to block a movement of the second part (3) in respect to the stationary part (2), so that an unintentional loosening of the bolt connection is prevented independent from power being supplied to the bolt tensioner (1).

9. Bolt tensioner (1) according to claim 7, whereby the second part (3) of the bolt tensioner (1) comprises a thread (13) to interact with the thread of a bolt.

10. Arrangement to be used in a method according to one of the claims 1 to 7, whereby the bolt tensioners (1) are connected to each other and to a power source by a connection (7), preferably a cable or a hose,
**characterized in that**
a plurality of bolt tensioners (1) form a group (8a, 8b, 8c) of bolt tensioners (1) and that the arrangement comprises a plurality of groups (8a, 8b, 8c) of bolt tensioners (1), and that the groups (8a, 8b, 8c) of bolt tensioners (1) are connected by the connection (7) in a way to be arranged in different, spaced apart location along the flange (11) of the tower (10).
